# EUROPÄISCHE PATENTSCHRIFT

(11) **EP 3 513 069 B1**
(45) Veröffentlichungstag und Bekanntmachung des Hinweises auf die Patenterteilung: **23.12.2020**
(21) Anmeldenummer: 17765169.2
(22) Anmeldetag: 11.09.2017
(51) Int. Cl.: F03D 17/00

(54) **VERFAHREN UND VORRICHTUNG ZUR ERMITTLUNG VON BELASTUNGEN AUF EINEN TURM EINER WINDENERGIEANLAGE**
METHOD AND DEVICE FOR DETERMINING LOADS ON A WIND TURBINE TOWER
PROCÉDÉ ET DISPOSITIF POUR DÉTERMINER DES SOLLICITATIONS EXERCÉES SUR UN MÂT D'ÉOLIENNE

(30) Priorität: 13.09.2016 DE 102016117191
(43) Veröffentlichungstag der Anmeldung: 24.07.2019
(73) Patentinhaber: FOS4X GmbH, 81371 München (DE)
(72) Erfinder: MÜLLER, Mathias, 82194 Gröbenzell (DE); LINDEMANN, Christian, 80637 München (DE); SCHAUß, Thomas, 82205 Gilching (DE)
(74) Vertreter: Zimmermann & Partner Patentanwälte mbB
(86) Internationale Anmeldenummer: PCT/EP2017/072751
(87) Internationale Veröffentlichungsnummer: WO 2018/050596

(56) Entgegenhaltungen:
- US-A1- 2009 263 245
- US-A1- 2011 115 233
- US-A1- 2011 268 569
- US-A1- 2013 287 567
- VEDRANA SPUDIC ET AL: "Explicit model predictive control for reduction of wind turbine structural loads", DECISION AND CONTROL (CDC), 2012 IEEE 51ST ANNUAL CONFERENCE ON, IEEE, 10. Dezember 2012 (2012-12-10), Seiten 1721-1726, XP032324249, DOI: 10.1109/CDC.2012.6426490 ISBN: 978-1-4673-2065-8

## Beschreibung

### TECHNISCHES GEBIET

Die vorliegende Erfindung betrifft im Allgemein eine Überwachung des Betriebs von Windenergieanlagen, insbesondere die Überwachung des Zustands eines Turms einer Windenergieanlage. Die Erfindung betrifft insbesondere eine Anordnung mit faseroptischen Sensoren zur Ermittlung von Belastungen auf einen Turm einer Windenergieanlage.

### STAND DER TECHNIK

Zur Überwachung von Windenergieanlagen gewinnen Systeme, die den Zustand beurteilen an Bedeutung. Der Zustand eines Turms einer Windenergieanlage, also zum Beispiel Verschleiß, Materialermüdung und andere Veränderungen, die durch Alterung oder Nutzung auftreten können, ist Gegenstand der Zustandsüberwachung von Windenergieanlagen. Durch die Kenntnis des Zustands können Wartungsarbeiten geplant, der gegenwärtige Wert der Anlage geschätzt und Sicherheitsauflagen des Gesetzgebers und Kunden erfüllt werden.

In existierenden Anlagen wird der Turm einer Windenergieanlage hinsichtlich der zu erwartenden Belastungen, z.B. Belastungen durch Gravitationslastzyklen die durch die Anzahl der Rotorrotationen oder Belastungen durch Windböen, die über die Lebensdauer der Windenergieanlag zu erwarten sind, ausgelegt. Nach Installation der Windenergieanlage wird der Zustand des Turms der Windenergieanlage beispielsweise mittels regelmäßiger Inspektion überprüft. Diese Zustandsüberwachung des Turms ist jedoch mit einer gewissen Unsicherheit behaftet, da bei kurzfristigen starken Belastungen, z.B. starken Windböen bei Gewitter, kritische Materialbelastungen auftreten können die ggf. kurz darauf zu einem Materialversagen führen können.

US 2009/263245 A1 betrifft ein System und Verfahren zum Bestimmen von Windturbinenturm-Basisdrehmomentlasten.

Daher besteht das Bedürfnis eine verbesserte Überwachung des Zustands eines Turms einer Windenergieanlage bereitzustellen.

### ZUSAMMENFASSUNG DER OFFENBARUNG

Ausführungsformen der vorliegenden Offenbarung stellen ein Verfahren zur Ermittlung von Belastungen auf einen Turm einer Windenergieanlage gemäß Anspruch 1 bereit. Ferner stellen Ausführungsformen der vorliegenden Offenbarung eine Vorrichtung angepasst zur Ermittlung von Belastungen auf einen Turm einer Windenergieanlage gemäß Anspruch 8 bereit.

Gemäß einer Ausführungsform wird ein Verfahren zur Ermittlung von Belastungen auf einen Turm einer Windenergieanlage zur Verfügung gestellt. Das Verfahren umfasst: Bestimmen von Biegemomenten in mindestens einem Rotorblatt der Windenergieanlage zum Bereitstellen einer ersten Größe, welche eine erste Kraft angibt, die auf eine Gondel des Turms der Windenergieanlage wirkt; Bestimmen einer Gondelauslenkung zum Bereitstellen einer zweiten Größe, welche eine zweite Kraft angibt, die auf die Gondel des Turms der Windenergieanlage wirkt; Zuführen der ersten Größe und der zweiten Größe in ein Berechnungsmodell, welches das Turmverhalten abbildet; und Ermitteln von Belastungen auf den Turm der Windenergieanlage anhand des Berechnungsmodells, wobei beim Bestimmen von den Biegemomenten in dem mindestens einen Rotorblatt eine Dehnung des mindestens einen Rotorblatts mittels mindestens einem Dehnungssensor gemessen wird, wobei der mindestens eine Dehnungssensor ein faseroptischer Dehnungssensor ist, wobei beim Bestimmen der Gondelauslenkung eine Positionsbestimmung der Gondel mittels einer Positionssensorvorrichtung durchgeführt wird, die dazu angepasst ist ein RTK-GPS (Real Time Kinematic-GPS)-Positionsermittlungsverfahren durchzuführen, und wobei beim Bestimmen der Gondelauslenkung ein stationärer Referenzpunkt verwendet wird.

Gemäß einer weiteren Ausführungsform wird eine Vorrichtung angepasst zur Ermittlung von Belastungen auf einen Turm einer Windenergieanlage zur Verfügung gestellt. Die Vorrichtung umfasst: zumindest einen Dehnungssensor angeordnet und angepasst zur Messung einer Dehnung mindestens eines Rotorblatts der Windenergieanlage, wobei der Dehnungssensor ein faseroptischer Dehnungssensor ist; zumindest eine Positionssensorvorrichtung angeordnet und angepasst zur Positionsbestimmung einer Gondel des Turms der Windenergieanlage, wobei die Positionssensorvorrichtung dazu angepasst ist, ein RTK-GPS (Real Time Kinematic-GPS)-Positionsermittlungsverfahren durchzuführen; und eine Auswerteeinheit, die mit dem zumindest einen Dehnungssensor zum Empfang eines ersten Signals von dem zumindest einen Dehnungssensor und die mit der zumindest einen Positionssensorvorrichtung zum Empfang eines zweiten Signals von der zumindest einen Positionssensorvorrichtung verbunden ist, wobei die Auswerteeinheit angepasst ist, aus dem ersten Signal Biegemomente in dem mindestens einen Rotorblatt der Windenergieanlage zu bestimmen, um eine erste Größe bereitzustellen, wobei die Auswerteeinheit angepasst ist, aus dem zweiten Signal eine Gondelauslenkung zu bestimmen, wobei beim Bestimmen der Gondelauslenkung ein stationärer Referenzpunkt verwendet wird, um eine zweite Größe bereitzustellen, und wobei die Auswerteeinheit angepasst ist, aus der ersten Größe und der zweiten Größe anhand eines Berechnungsmodells, welches das Turmverhalten abbildet, Belastungen auf den Turm der Windenergieanlage zu ermitteln.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
- Figur 1: ein Ablaufdiagramm eines Verfahrens zur Ermittlung von Belastungen auf einen Turm einer Windenergieanlage gemäß hierin beschriebener Ausführungsformen;
- Figur 2: ein Ablaufdiagramm eines Verfahrens zur Ermittlung von Belastungen auf einen Turm einer Windenergieanlage gemäß weiterer hierin beschriebener Ausführungsformen;
- Figur 3: eine vereinfachte schematische Darstellung einer Vorrichtung gemäß hierin beschriebener Ausführungsformen zur Ermittlung von Belastungen auf einen Turm einer Windenergieanlage;
- Figur 4: eine Windenergieanlage zur Erläuterung von hierin beschriebenen Ausführungsformen einer Vorrichtung zur Ermittlung von Belastungen auf einen Turm einer Windenergieanlage; und
- Figur 5: einen faseroptischen Sensor zum Bestimmen von Biegemomenten in mindestens einem Rotorblatt der Windenergieanlage hierin beschriebenen Ausführungsformen.

### BESCHREIBUNG DER AUSFÜHRUNGSFORMEN

Nachstehend werden Ausführungsformen dieser Offenbarung näher erläutert. Die Zeichnungen dienen der Veranschaulichung eines oder mehrerer Beispiele von Ausführungsformen. In den Zeichnungen bezeichnen gleiche Bezugszeichen die gleichen oder ähnliche Merkmale der jeweiligen Ausführungsformen.

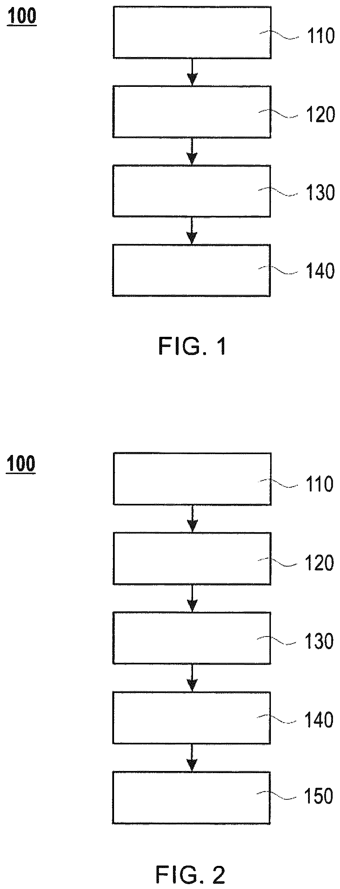

Figur 1 zeigt ein Ablaufdiagramm eines Verfahrens 100 zur Ermittlung von Belastungen auf einen Turm einer Windenergieanlage gemäß hierin beschriebener Ausführungsformen. Das Verfahren 100 umfasst in einem ersten Schritt 110 ein Bestimmen von Biegemomenten in mindestens einem Rotorblatt der Windenergieanlage zum Bereitstellen einer ersten Größe. Typischerweise gibt die erste Größe eine erste Kraft an, die auf eine Gondel des Turms der Windenergieanlage wirkt. Ferner umfasst das Verfahren 100 in einem zweiten Schritt 120 ein Bestimmen einer Gondelauslenkung zum Bereitstellen einer zweiten Größe. Typischerweise gibt die zweite Größe eine zweite Kraft an, die auf die Gondel des Turms der Windenergieanlage wirkt. Des Weiteren umfasst das Verfahren 100 in einem dritten Schritt 130 ein Zuführen der ersten Größe und ein Zuführen der zweiten Größe in ein Berechnungsmodell, welches das Turmverhalten abbildet. Ein vierter Schritt 140 des Verfahrens umfasst ein Ermitteln von Belastungen auf den Turm der Windenergieanlage anhand des Berechnungsmodells.

Somit kann mittels des hierin beschriebenen Verfahrens zur Ermittlung von Belastungen auf einen Turm einer Windenergieanlage eine verbesserte Zustandsüberwachung eines Turms einer Windenergieanlage bereitgestellt werden.

Gemäß Ausführungsformen, die mit anderen hierin beschriebenen Ausführungsformen kombiniert werden können, ist das Berechnungsmodell ein physikalisches Modell der Windenergieanlage, insbesondere des Turms der Windenergieanlage. Typischerweise beinhaltet ein derartiges physikalisches Berechnungsmodell Modellparameter die beispielsweise die Dimensionierung der Windenergieanlage, insbesondere des Turms der Windenergieanlage, sowie die Materialeigenschaften der Windenergieanlage, insbesondere des Turms der Windenergieanlage, berücksichtigen. Ferner kann das physikalische Berechnungsmodell dynamische Modellparameter beinhalten, welche beispielsweise Materialalterungsprozesse, Belastungsschwankungen, Witterungsbedingungen oder Ähnliches berücksichtigen.

Gemäß weiteren Ausführungsformen, die mit anderen hierin beschriebenen Ausführungsformen kombiniert werden können, kann in dem ersten Schritt 110 des Verfahrens 100 beim Bestimmen von den Biegemomenten in dem mindestens einen Rotorblatt eine Dehnung des mindestens einen Rotorblatts mittels mindestens einem Dehnungssensor gemessen werden, so dass Biegemomente zumindest in einer Richtung ermittelt werden können. Gemäß weiteren typischen Ausführungsformen können zumindest zwei Dehnungssensoren, insbesondere drei Dehnungssensoren oder zumindest vier Dehnungssensoren verwendet werden, um Biegemomente in einer Schnittebene des mindestens einen Rotorblatts der Windenergieanlage zu ermitteln. Bei geeigneter Anordnung von zwei Dehnungssensoren, zum Beispiel an unterschiedlichen Winkelkoordinaten der Rotorblattwurzel, können die Biegemomente in zwei Richtungen, typischerweise zwei orthogonalen Richtungen, die auf das Rotorblatt wirken auch mit zwei Dehnungssensoren gemessen werden. Hierzu sollten die zwei Dehnungssensoren typsicherweise mit um 90° gedrehten Winkelkoordinaten angebracht sein, bzw. nicht mit um 180° gedrehten Winkelkoordinaten angebracht sein.

Dementsprechend kann gemäß Ausführungsformen des hierin beschriebenen Verfahrens beispielsweise beim Bestimmen von den Biegemomenten in dem mindestens einen Rotorblatt die Dehnung des mindestens einen Rotorblatts in zwei, insbesondere zwei zueinander orthogonalen, Richtungen gemessen werden.

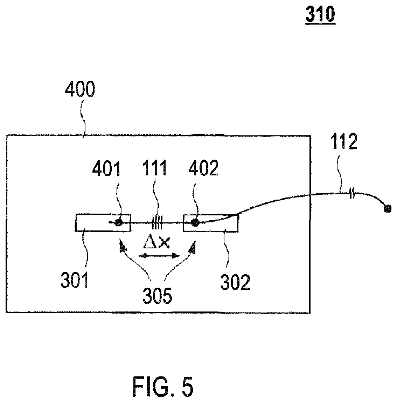

Gemäß weiteren Ausführungsformen, die mit anderen hierin beschriebenen Ausführungsformen kombiniert werden können, ist der mindestens eine Dehnungssensor in dem mindestens einen Rotorblatt angeordnet. Beispielsweise kann der mindestens eine Dehnungssensor ein faseroptischer Dehnungssensor sein, wie er beispielhaft mit Bezug auf Figur 5 beschrieben ist.

Gemäß weiteren Ausführungsformen, die mit anderen hierin beschriebenen Ausführungsformen kombiniert werden können, kann beim Bestimmen der Gondelauslenkung eine Positionsbestimmung der Gondel mittels einer Positionssensorvorrichtung durchgeführt werden. Typischerweise ist die Positionssensorvorrichtung dazu angepasst, um mindestens ein Verfahren ausgewählt aus der Gruppe bestehend aus: einem GPS-Positionsermittlungsverfahren, insbesondere per RTK-GPS (Real Time Kinematic-GPS); einem differentiellen GPS-Positionsermittlungsverfahren; einem kamerabasierten Positionsermittlungsverfahren; einem radarbasierten Positionsermittlungsverfahren; und einem laserbasierten Positionsermittlungsverfahren, durchzuführen. Dabei kann die Positionssensorvorrichtung ausgelegt sein um zur Positionsermittlung einen stationären Referenzpunkt zu verwenden. Demnach kann in dem zweiten Schritt 120 des Verfahrens 100 beim Bestimmen der Gondelauslenkung ein stationärer Referenzpunkt verwendet werden.

In diesem Zusammenhang sei darauf hingewiesen, dass unter einem differentiellen GPS-Positionsermittlungsverfahren, ein Verfahren zu verstehen ist, bei welchem ein GPS-Referenzfunksignal oder eine separate GPS-Referenzstation in der Nähe der Windenergieanlage verwendet.

Wie beispielhaft in dem in Figur 2 dargestellten Ablaufdiagramm dargestellt ist, kann das Verfahren 100 in einem fünften Schritt 150 ferner ein Bestimmen von Windparametern, insbesondere Windgeschwindigkeit und/oder Windrichtung, aus den ermittelten Belastungen auf den Turm umfassen. Dabei kann beim Bestimmen der Windparameter beispielsweise das physikalische Berechnungsmodell, welches das Turmverhalten abbildet verwendet werden. Insbesondere können anhand der ermittelten Belastungen auf den Turm der Windenergieanlage, basierend auf dem physikalischen Berechnungsmodell, Rückschlüsse auf Windparameter, wie beispielsweise Windgeschwindigkeit oder Windrichtung, gezogen werden.

Gemäß weiteren Ausführungsformen, die mit anderen hierin beschriebenen Ausführungsformen kombiniert werden können, können in dem vierten Schritt 140 des Verfahrens 100 beim Ermitteln von den Belastungen auf den Turm anhand des Berechnungsmodells Windenergieanlagenparameter, insbesondere Turmdicke und/oder Turmmaterial, verwendet werden, so dass eine genaue, an die Windenergieanlage angepasste, Belastungsermittlung ermöglicht wird.

Gemäß weiteren Ausführungsformen, die mit anderen hierin beschriebenen Ausführungsformen kombiniert werden können, kann in dem vierten Schritt 140 des Verfahrens 100 beim Ermitteln der Belastungen auf den Turm anhand des Berechnungsmodells ein Kalman Filter verwendet werden, um die Genauigkeit bei der Ermittlung der Belastungen auf den Turm zu erhöhen.

In diesem Zusammenhang sei erwähnt, dass im Gegensatz zu den klassischen FIR- und IIR-Filtern der Signal- und Zeitreihenanalyse der Kalman-Filter auf einer Zustandsraummodellierung basiert, bei der explizit zwischen der Dynamik des Systemzustands und dem Prozess seiner Messung unterschieden wird. Daher ist die Verwendung eines Kalman Filters in dem hierin beschriebenen Verfahren besonders vorteilhaft, da dessen spezielle mathematische Struktur, den Einsatz in Echtzeitsystemen ermöglicht, beispielsweise bei der Auswertung von Signalen zur Positionsverfolgung sich bewegender Objekte. Somit ermöglicht die Verwendung eines Kalman-Filters beim Ermitteln der Belastungen auf den Turm anhand des Berechnungsmodells, insbesondere unter Berücksichtigung der Gondelauslenkung, die Genauigkeit bei der Ermittlung der Belastungen auf den Turm aufgrund der Echtzeitfähigkeit des Filters zu erhöhen.

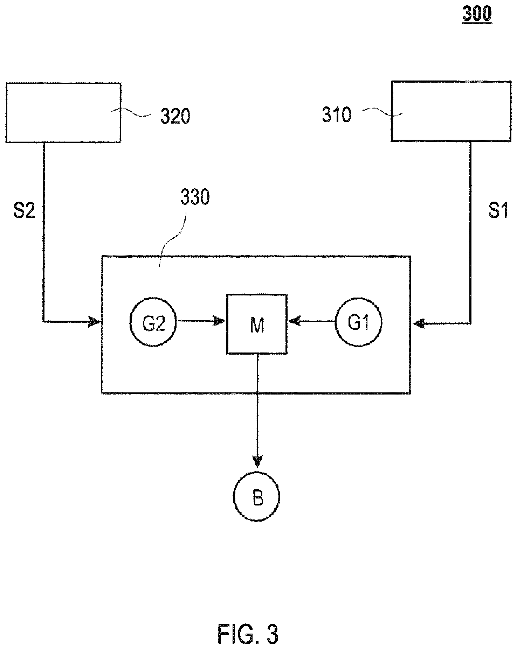

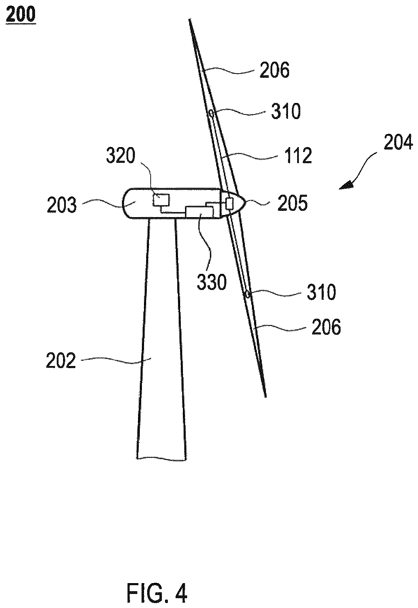

Gemäß weiteren Ausführungsformen, die mit anderen hierin beschriebenen Ausführungsformen kombiniert werden können, kann das hierin beschriebene Verfahren insbesondere unter Verwendung einer hierin beschriebenen Vorrichtung zur Ermittlung von Belastungen auf einen Turm einer Windenergieanlage durchgeführt werden. Figur 3 zeigt eine vereinfachte schematische Darstellung einer Vorrichtung 300 gemäß hierin beschriebener Ausführungsformen zur Ermittlung von Belastungen auf einen Turm 202 einer Windenergieanlage 200, wie sie beispielhaft in Figur 4 dargestellt ist.

Gemäß hierin beschriebener Ausführungsformen, umfasst die Vorrichtung 300 zur Ermittlung von Belastungen auf einen Turm 202 einer Windenergieanlage 200 zumindest einen Dehnungssensor 310, der an mindestens einem Rotorblatt 210 der Windenergieanlage 200 derart angeordnet und angepasst ist, um eine Messung einer Dehnung des mindestens einen Rotorblatts der Windenergieanlage durchzuführen. Ferner umfasst die hierin beschriebene Vorrichtung 300 zumindest eine Positionssensorvorrichtung 320, die an der Windenergieanlage 200 derart angeordnet und angepasst ist, um eine Positionsbestimmung der Gondel 203 des Turms 202 der Windenergieanlage 200 durchzuführen. Des Weiteren umfasst die hierin beschriebene Vorrichtung 300 eine Auswerteeinheit 330, die mit dem zumindest einen Dehnungssensor 310 zum Empfang eines ersten Signals S1 von dem zumindest einen Dehnungssensor 310 und die mit der zumindest einen Positionssensorvorrichtung 320 zum Empfang eines zweiten Signals S2 von der zumindest einen Positionssensorvorrichtung 320 verbunden ist.

Typischerweise ist die Auswerteeinheit 330 angepasst um aus dem ersten Signal S1 Biegemomente in dem mindestens einen Rotorblatt der Windenergieanlage zu bestimmen, um eine erste Größe G1 bereitzustellen. Ferner ist die Auswerteeinheit 330 typischerweise angepasst um aus dem zweiten Signal S2 eine Gondelauslenkung zu bestimmen, um eine zweite Größe G2 bereitzustellen. Wie in Figur 3 schematisch dargestellt, ist die Auswerteeinheit 330 gemäß hierein beschriebener Ausführungsformen angepasst, um aus der ersten Größe G1 und der zweiten Größe G2 anhand eines Berechnungsmodells M, welches das Turmverhalten abbildet, Belastungen B auf den Turm 202 der Windenergieanlage 200 zu ermitteln.

Somit kann mittels der hierin beschriebenen Ausführungsformen der Vorrichtung zur Ermittlung von Belastungen auf einen Turm einer Windenergieanlage eine verbesserte Zustandsüberwachung des Turms einer Windenergieanlage bereitgestellt werden.

Gemäß weiteren Ausführungsformen, die mit anderen hierin beschriebenen Ausführungsformen kombiniert werden können, kann die Positionssensorvorrichtung der hierin beschriebenen Vorrichtung dazu angepasst sein mindestens ein Verfahren ausgewählt aus der Gruppe bestehend aus: einem GPS-Positionsermittlungsverfahren, insbesondere per RTK-GPS (Real Time Kinematic-GPS); einem differentiellen GPS-Positionsermittlungsverfahren; einem kamerabasierten Positionsermittlungsverfahren; einem radarbasierten Positionsermittlungsverfahren; und einem laserbasierten Positionsermittlungsverfahren, durchzuführen. Ferner kann die Positionssensorvorrichtung auch ausgelegt sein um zur Positionsermittlung einen stationären Referenzpunkt zu verwenden.

Figur 4 zeigt eine Windenergieanlage 200 mit einer hierin Vorrichtung zur Ermittlung von Belastungen gemäß hierein beschriebener Ausführungsformen. Die Windenergieanlage 200 beinhaltet einen Turm 202 und eine Gondel 203. An der Gondel 203 ist ein Rotor 204 befestigt. Der Rotor 204 beinhaltet eine Nabe 205, an der die Rotorblätter 206 befestigt sind. Gemäß typischen Ausführungsformen hat der Rotor 204 zumindest zwei Rotorblätter, insbesondere drei Rotorblätter. Beim Betrieb der Windenergieanlage rotiert der Rotor 204, d.h. die Nabe 205 mit den Rotorblättern 206 um eine Achse. Dabei wird ein Generator zur Stromerzeugung angetrieben.

Gemäß Ausführungsformen, die mit anderen hierin beschriebenen Ausführungsformen kombiniert werden können, wird in der Windenergieanlage ein Dehnungssensor 310 eingesetzt, beispielsweise ein faseroptischer Dehnungssensor 310, wie er in Figur 5 dargestellt ist. Typischerweise wird der Dehnungssensor 310 an einem oder mehreren Rotorblättern 206, insbesondere in einem äußeren radialen Bereich, zur Verfügung gestellt werden. Wie in Figur 4 dargestellt, ist zumindest ein Dehnungssensor 310 an einem Rotorblatt zur Verfügung gestellt. Der Dehnungssensor 310 ist über eine Signalleitung 212, beispielsweise einen Lichtleiter mit der hierin beschriebenen Auswerteeinheit 330 verbunden. In diesem Zusammenhang sei angemerkt, dass es für den Einsatz von faseroptischer Dehnungssensoren in Rotorblättern von Windenergieanlage bzw. für Verfahren zur Überwachung von Windenergieanlage besonders günstig ist, wenn eine Dehnung und/oder einen Stauchung in einer Richtung senkrecht zur Längserstreckung des Lichtleiters gemessen wird.

Gemäß typischen Ausführungsformen, die mit anderen hierin beschriebenen Ausführungsformen kombiniert werden können, wird an jedem Rotorblatt mindestens ein Dehnungssensor bereitgestellt, so dass in jedem Rotorblatt kann separat eine individuelle Dehnungs- bzw. Stauchungsverteilung gemessen und entsprechende Biegemomente bestimmt werden können. Insbesondere wird gemäß hierein beschriebener Ausführungsformen in jedem Rotorblatt mindestens ein faseroptischer Dehnungssensor zur Verfügung gestellt.

Gemäß einigen der hier beschriebenen Ausführungsformen, die mit anderen Ausführungsformen kombiniert werden können, ermöglichen faseroptische Dehnungssensor, bei welchen ein Signal optisch über einen Lichtleiter übertragen wird, eine bisher in der Praxis als ungünstig angesehene radiale Montageposition entlang einer Längserstreckung des Rotorblatts, da die Übertragung mittels eines Lichtleiters bzw. einer optischen Faser ein reduziertes Risiko eines Blitzschadens mit sich bringt. Daher können faseroptische Dehnungssensoren derart zur Verfügung gestellt werden, dass sie eine Montage in einem radial äußeren Bereich eines Rotorblatts erlauben, ohne das Risiko eines Blitzschadens zu erhöhen.

Figur 5 zeigt eine vereinfachte schematische Darstellung eines faseroptischen Dehnungssensors 310 zum Messen von Dehnungen und/oder Stauchungen gemäß hierein beschriebener Ausführungsformen. Der Dehnungssensors 310 beinhaltet einen Lichtleiter 112 mit einem Sensorelement 111, zum Beispiel ein Faser-Bragg-Gitter, wobei der Lichtleiter 112 in einer Einspannvorrichtung 305eingespannt ist. Die Einspannvorrichtung 305 wiederum beinhaltet eine Trägerstruktur, welche ein erstes Befestigungselement 301 zur Befestigung des Lichtleiters 112 an einer ersten Position 401 und ein von dem ersten Befestigungselement 301 beanstandetes zweites Befestigungselement 302 zur Befestigung des Lichtleiters 112 an einer zweiten Position 402 aufweist, wobei die ersten und zweiten Positionen 401, 402 einen ersten Abstand in einer Längserstreckung des Lichtleiters 112 aufweisen. Ferner kann der faseroptische Dehnungssensor einen Zwischenträger 400 aufweisen, über den der Dehnungssensor an ein Messobjekt, beispielsweise ein Rotorblatt einer Windenergieanlage anbringbar ist. Das Sensorelement 111 ist typischerweise empfindlich auf eine Faserdehnung bzw. eine Faserstauchung (siehe Pfeile Δx in Figur 5), so dass in den Lichtleiter 112 eintretende optische Strahlung mit einer veränderten Wellenlängenverlauf aus dem Sensorelement 111 reflektiert wird, woraus die Dehnung, beispielsweise mit einer entsprechenden Auswerte- und Analyseeinheit, bestimmt werden kann.

Es sei an dieser Stelle darauf hingewiesen, dass die hierin beschriebenen Aspekte und Ausführungsformen angemessen miteinander kombinierbar sind, und dass einzelne Aspekte dort weggelassen werden können, wo es im Rahmen des fachmännischen Handelns sinnvoll und möglich ist. Abwandlungen und Ergänzungen der hierin beschriebenen Aspekte sind dem Fachmann geläufig.

## Patentansprüche

1. Verfahren zur Ermittlung von Belastungen auf einen Turm einer Windenergieanlage, umfassend:
- Bestimmen von Biegemomenten in mindestens einem Rotorblatt der Windenergieanlage zum Bereitstellen einer ersten Größe, welche eine erste Kraft angibt, die auf eine Gondel des Turms der Windenergieanlage wirkt;
- Bestimmen einer Gondelauslenkung zum Bereitstellen einer zweiten Größe, welche eine zweite Kraft angibt, die auf die Gondel des Turms der Windenergieanlage wirkt;
- Zuführen der ersten Größe und der zweiten Größe in ein Berechnungsmodell, welches das Turmverhalten abbildet; und
- Ermitteln von Belastungen auf den Turm der Windenergieanlage anhand des Berechnungsmodells,
wobei beim Bestimmen von den Biegemomenten in dem mindestens einen Rotorblatt eine Dehnung des mindestens einen Rotorblatts mittels mindestens einem Dehnungssensor gemessen wird, wobei der mindestens eine Dehnungssensor ein faseroptischer Dehnungssensor ist,
wobei beim Bestimmen der Gondelauslenkung eine Positionsbestimmung der Gondel mittels einer Positionssensorvorrichtung durchgeführt wird, die dazu angepasst ist ein RTK-GPS (Real Time Kinematic-GPS)-Positionsermittlungsverfahren durchzuführen, und
wobei beim Bestimmen der Gondelauslenkung ein stationärer Referenzpunkt verwendet wird.

2. Verfahren gemäß Anspruch 1, wobei beim Bestimmen von den Biegemomenten in dem mindestens einen Rotorblatt die Dehnung des mindestens einen Rotorblatts in zwei, insbesondere zueinander orthogonalen, Richtungen gemessen wird.

3. Verfahren gemäß Anspruch 1 oder 2, wobei der mindestens eine Dehnungssensor in dem mindestens einem Rotorblatt angeordnet ist.

4. Verfahren gemäß einem der Ansprüche 1 bis 3, wobei die Positionssensorvorrichtung ferner dazu angepasst ist um mindestens ein Verfahren ausgewählt aus der Gruppe bestehend aus: einem differentiellen GPS-Positionsermittlungsverfahren; einem kamerabasierten Positionsermittlungsverfahren; einem radarbasierten Positionsermittlungsverfahren; und einem laserbasierten Positionsermittlungsverfahren, durchzuführen.

5. Verfahren gemäß einem der Ansprüche 1 bis 4, ferner umfassend Bestimmen von Windparametern, insbesondere Windgeschwindigkeit und/oder Windrichtung, aus den ermittelten Belastungen auf den Turm.

6. Verfahren gemäß einem der Ansprüche 1 bis 5, wobei beim Ermitteln der Belastungen auf den Turm anhand des Berechnungsmodells ein Kalman Filter verwendet wird, um die Genauigkeit bei der Ermittlung der Belastungen auf den Turm zu erhöhen.

7. Verfahren gemäß einem der Ansprüche 1 bis 6, wobei beim Ermitteln von den Belastungen auf den Turm anhand des Berechnungsmodells Windenergieanlagenparameter, insbesondere Turmdicke und/oder Turmmaterial verwendet werden.

8. Vorrichtung angepasst zur Ermittlung von Belastungen auf einen Turm (202) einer Windenergieanlage (200), umfassend:
zumindest einen Dehnungssensor (310) angeordnet und angepasst zur Messung einer Dehnung mindestens eines Rotorblatts (206) der Windenergieanlage, wobei der Dehnungssensor ein faseroptischer Dehnungssensor ist;
zumindest eine Positionssensorvorrichtung (320) angeordnet und angepasst zur Positionsbestimmung einer Gondel (203) des Turms der Windenergieanlage, wobei die Positionssensorvorrichtung dazu angepasst ist, ein RTK-GPS (Real Time Kinematic-GPS)-Positionsermittlungsverfahren durchzuführen; und
eine Auswerteeinheit (330), die mit dem zumindest einen Dehnungssensor zum Empfang eines ersten Signals von dem zumindest einen Dehnungssensor und die mit der zumindest einen Positionssensorvorrichtung zum Empfang eines zweiten Signals von der zumindest einen Positionssensorvorrichtung verbunden ist,
wobei die Auswerteeinheit angepasst ist, aus dem ersten Signal Biegemomente in dem mindestens einen Rotorblatt der Windenergieanlage zu bestimmen, um eine erste Größe bereitzustellen,
wobei die Auswerteeinheit angepasst ist, aus dem zweiten Signal eine Gondelauslenkung zu bestimmen, wobei beim Bestimmen der Gondelauslenkung ein stationärer Referenzpunkt verwendet wird, um eine zweite Größe bereitzustellen, und
wobei die Auswerteeinheit angepasst ist, aus der ersten Größe und der zweiten Größe anhand eines Berechnungsmodells, welches das Turmverhalten abbildet, Belastungen auf den Turm der Windenergieanlage zu ermitteln.

9. Vorrichtung gemäß Anspruch 8, wobei die Positionssensorvorrichtung ferner dazu angepasst ist um mindestens ein Verfahren ausgewählt aus der Gruppe bestehend aus: einem differentiellen GPS-Positionsermittlungsverfahren; einem kamerabasierten Positionsermittlungs-verfahren; einem radarbasierten Positionsermittlungsverfahren; und einem laserbasierten Positionsermittlungsverfahren, durchzuführen.

## Claims

1. A method for determining loads on a tower of a wind turbine, comprising:
- identifying bending moments in at least one rotor blade of the wind turbine for providing a first quantity indicating a first force acting upon a nacelle of the tower of the wind turbine;
- identifying a nacelle deflection for providing a second quantity indicating a second force acting upon the nacelle of the tower of the wind turbine;
- inputting the first quantity and the second quantity into a calculation model mapping the tower behavior; and
- identifying loads on the tower of the wind turbine using the calculation model,
wherein in identifying the bending moments in the at least one rotor blade, an elongation of the at least one rotor blade is measured by means of at least one strain sensor, wherein the at least one strain sensor is a fiber optic strain sensor,
wherein in identifying the nacelle deflection, a position determination of the nacelle is performed by means of a position sensor device which is adapted to perform an RTK-GPS (Real Time Kinematic-GPS) position determination method, and
wherein in identifying the nacelle deflection, a stationary reference point is used.

2. The method according to claim 1, wherein in identifying the bending moments in the at least one rotor blade, the elongation of the at least one rotor blade is measured in two, in particular mutually orthogonal directions.

3. The method according to claim 1 or 2, wherein the at least one strain sensor is arranged within the at least one rotor blade.

4. The method according to any one of claims 1 to 3, wherein the position sensor device is further adapted to perform at least one method selected from the group consisting of: a differential GPS position determination method; a camera-based position determination method; a radar-based position determination method; and a laser-based position determination method.

5. The method according to any one of claims 1 to 4, further comprising determining wind parameters, in particular the wind velocity and/or the wind direction, from the identified loads on the tower.

6. The method according to any one of claims 1 to 5, wherein in identifying the loads on the tower using the calculation model, a Kalman filter is used for increasing the accuracy in identifying the loads on the tower.

7. The method according to any one of claims 1 to 6, wherein in identifying the loads on the tower using the calculation model, wind turbine parameters, in particular the tower thickness and/or the tower material, are used.

8. A device adapted for determining loads on a tower (202) of a wind turbine (200), comprising:
at least one strain sensor arranged and adapted for measuring an elongation of at least one rotor blade (206) of the wind turbine, wherein the strain sensor is a fiber optic strain sensor;
at least one position sensor device (320) arranged and adapted for determining a position of a nacelle (203) of the tower of the wind turbine, wherein the position sensor device is adapted to perform an RTK-GPS (Real Time Kinematic-GPS) position determination method, and
an evaluation unit (330) associated with the at least one strain sensor for receiving a first signal from the at least one strain sensor, and with the at least one position sensor device for receiving a second signal from the at least one position sensor device,
wherein the evaluation unit is adapted to identify, from the first signal, bending moments in the at least one rotor blade of the wind turbine for providing a first quantity,
wherein the evaluation unit is adapted to identify a nacelle deflection from the second signal, wherein in identifying the nacelle deflection, a stationary reference point is used for providing a second quantity, and
wherein the evaluation unit is adapted to identify, from the first and the second quantity using a calculation model mapping the tower behavior, loads on the tower of the wind turbine.

9. The device according to claim 8, wherein the position sensor device is further adapted to perform at least one method selected from the group consisting of: a differential GPS position determination method; a camera-based position determination method; a radar-based position determination method; and a laser-based position determination method.

## Revendications

1. Procédé pour déterminer des sollicitations exercées sur un mât d'une éolienne, comprenant :
- la détermination de couples de torsion dans au moins une pale de rotor de l'éolienne pour mettre à disposition une première grandeur, laquelle indique une première force qui agit sur une nacelle du mât de l'éolienne ;
- la détermination d'un déport de nacelle pour mettre à disposition une deuxième grandeur, laquelle indique une deuxième force qui agit sur la nacelle du mât de l'éolienne ;
- l'ajout de la première grandeur et de la deuxième grandeur dans un modèle de calcul, lequel représente le comportement du mât ; et
- la détermination de sollicitations exercées sur le mât de l'éolienne sur la base du modèle de calcul,
sachant que lors de la détermination des couples de torsion dans l'au moins une pale de rotor, un allongement de l'au moins une pale est mesurée au moyen d'au moins un capteur d'allongement, sachant que l'au moins un capteur d'allongement est un capteur d'allongement à fibres optiques,
sachant que lors de la détermination du déport de nacelle, une détermination de position de la nacelle est effectuée au moyen d'un dispositif de capteur de position qui est adapté pour effectuer un procédé de détermination de position RTK-GPS (Real Time Kinematic-GPS), et
sachant que lors de la détermination du déport de nacelle, un point de référence fixe est utilisé.

2. Procédé selon la revendication 1, sachant que lors de la détermination des couples de torsion dans l'au moins une pale de rotor, l'allongement de l'au moins une pale de rotor est mesuré dans deux directions, en particulier perpendiculaires l'une par rapport à l'autre.

3. Procédé selon la revendication 1 ou 2, sachant que l'au moins un capteur d'allongement est disposé dans l'au moins une pale de rotor.

4. Procédé selon l'une des revendications 1 à 3, sachant que le dispositif de capteur de position est en outre adapté pour effectuer au moins un procédé sélectionné dans le groupe constitué par : un procédé de détermination de position différentielle par GPS ; un procédé de détermination de position à base de caméra ; un procédé de détermination de position à base de radar ; et un procédé de détermination de position à base de laser.

5. Procédé selon l'une des revendications 1 à 4, comprenant en outre la détermination de paramètres du vent, en particulier de la vitesse du vent et/ou de la direction du vent, à partir des sollicitations déterminées exercées sur le mât.

6. Procédé selon l'une des revendications 1 à 5, sachant que lors de la détermination des sollicitations exercées sur le mât à l'aide du modèle de calcul, un filtre Kalman est utilisé pour augmenter la précision lors de la détermination des sollicitations exercées sur le mât.

7. Procédé selon l'une des revendications 1 à 6, sachant que lors de la détermination des sollicitations exercées sur le mât à l'aide du modèle de calcul, des paramètres d'éolienne, en particulier l'épaisseur de mât et/ou le matériau de mât, sont utilisés.

8. Dispositif adapté pour déterminer des sollicitations exercées sur un mât (202) d'une éolienne (200), comprenant :
au moins un capteur d'allongement (310) disposé et adapté pour mesurer un allongement d'au moins une pale de rotor (206) de l'éolienne, sachant que le capteur d'allongement est un capteur d'allongement à fibres optiques ;
au moins un dispositif de capteur de position (320) disposé et adapté pour déterminer la position d'une nacelle (203) du mât de l'éolienne, sachant que le dispositif de capteur de position est adapté pour effectuer un procédé de détermination de position RTK-GPS (Real Time Kinematic-GPS) ; et
une unité d'évaluation (330) qui est reliée à au moins un capteur d'allongement pour recevoir un premier signal depuis l'au moins un capteur d'allongement et qui est reliée à l'au moins un dispositif de capteur de position pour recevoir un deuxième signal depuis l'au moins un dispositif de capteur de position,
sachant que l'unité d'évaluation est adaptée pour déterminer des couples de torsion dans l'au moins une pale de rotor de l'éolienne à partir du premier signal afin de mettre à disposition une première grandeur,
sachant que l'unité d'évaluation est adaptée pour déterminer un déport de nacelle à partir du deuxième signal, sachant que lors de la détermination du déport de nacelle, un point de référence fixe est utilisé pour mettre à disposition une deuxième grandeur, et
sachant que l'unité d'évaluation est adaptée pour déterminer des sollicitations exercées sur le mât de l'éolienne à partir de la première grandeur et de la deuxième grandeur à l'aide d'un modèle de calcul, lequel représente le comportement du mât.

9. Dispositif selon la revendication 8, sachant que le dispositif de capteur de position est en outre adapté pour effectuer au moins un procédé sélectionné dans le groupe constitué par : un procédé de détermination de position différentielle par GPS ; un procédé de détermination de position à base de caméra ; un procédé de détermination de position à base de radar ; et un procédé de détermination de position à base de laser.
